# EUROPÄISCHE PATENTSCHRIFT

(11) **EP 3 795 325 B1**
(45) Veröffentlichungstag und Bekanntmachung des Hinweises auf die Patenterteilung: **23.02.2022**
(21) Anmeldenummer: 20183812.5
(22) Anmeldetag: 02.07.2020
(51) Int. Cl.: B29C 45/14, B29C 45/26, B29L 31/00

(54) **SPRITZGIESSVORRICHTUNG, VERFAHREN ZUM SPRITZGIESSEN VON MEHRKOMPONENTEN-TEILEN, VERWENDUNG EINES PLATZHALTERELEMENTS SOWIE COMPUTERPROGRAMM UND COMPUTERLESBARES MEDIUM**
INJECTION MOULDING DEVICE, METHOD FOR INJECTION MOULDING MULTI-COMPONENT PARTS, USE OF A SPACER ELEMENT AND COMPUTER PROGRAM AND COMPUTER-READABLE MEDIUM
DISPOSITIF DE MOULAGE PAR INJECTION, PROCÉDÉ DE MOULAGE PAR INJECTION DES PIÈCES À COMPOSANTS MULTIPLES, UTILISATION D'UN ENTRETOISE AINSI QUE PROGRAMME INFORMATIQUE ET SUPPORT LISIBLE PAR ORDINATEUR

(30) Priorität: 19.09.2019 DE 102019125252
(43) Veröffentlichungstag der Anmeldung: 24.03.2021
(73) Patentinhaber: Zahoransky Automation & Molds GmbH, 79108 Freiburg (DE)
(72) Erfinder: Schulz, Jürgen, 79111 Freiburg (DE); Hanser, Matthias, 79189 Bad Krozingen (DE); Ebner, Winfried, 79312 Emmendingen (DE)
(74) Vertreter: Mertzlufft-Paufler, Cornelius

(56) Entgegenhaltungen:
- WO-A1-2012/150897
- WO-A1-2016/124869
- DE-A1-102011 102 449

## Beschreibung

Die Erfindung betrifft eine Spritzgießvorrichtung mit einer Spritzgießform, die zumindest einen Formhohlraum zur wenigstens bereichsweisen Aufnahme eines Funktionsteils und zum Anspritzen eines Kunststoffformteils an das Funktionsteil zur Bildung eines Mehrkomponenten-Teils, insbesondere einer Spritze, aufweist.

Aus den Druckschriften DE 10 2011 102 449 A1 und DE 10 2011 120 403 A1 sind Spritzgießvorrichtungen der eingangs genannten Art vorbekannt. Aus der Druckschrift DE 10 2004 053 573 B4 ist eine horizontale Spritzgießmaschine für mehrere Materialien vorbekannt.

Spritzgießformen der eingangs genannten Art sind aus der Praxis vorbekannt und werden beispielsweise dazu genutzt, Mehrkomponenten-Teile in Form von Spritzen herzustellen. Als Kunststoffformteil wird hierbei ein Spritzenzylinder an ein Funktionsteil in Form einer Hohlnadel angespritzt. Neben der Medizintechnik sind auch zahlreiche Anwendungen beispielsweise im Elektronikbereich denkbar.

Bislang werden derartige Mehrkomponenten-Teile hergestellt, indem das Funktionsteil in eine Formplatte oder Formhälfte einer geöffneten Spritzgießform eingelegt wird. Anschließende wird die Spritzgießform geschlossen und das Kunststoffformteil gespritzt. Nach dem Abkühlen wird die Spritzgießform geöffnet und das fertige Mehrkomponenten-Teil Kunststoffformteil kann entnommen werden. Anschließend werden weitere Mehrkomponenten-Teile auf die entsprechende Art und Weise hergestellt.

Bei einem Modellwechsel, also dann, wenn beispielsweise Spritzen mit anderen Nadeldurchmessern hergestellt werden sollen, ist es notwendig, die Spritzgießvorrichtung umzurüsten. Dies war bisher mit einem hohen manuellen Aufwand verbunden.

Aufgabe der Erfindung ist es daher, eine Spritzgießvorrichtung sowie ein Verfahren zum Spritzgießen von Mehrkomponenten-Teilen vorzuschlagen, die ein effizientes Umrüsten der Spritzgießvorrichtung Kunststoffformteilbegünstigen.

Zur Lösung der Aufgabe wird zunächst eine Spritzgießvorrichtung der eingangs genannten Art vorgeschlagen, die die Mittel und Merkmale des unabhängigen, auf eine derartige Spritzgießvorrichtung gerichteten Anspruchs aufweist. So wird zur Lösung der Aufgabe insbesondere vorgeschlagen, dass die Spritzgießvorrichtung zumindest einen ersten Funktionsteilhalter für einen ersten Funktionsteiltyp und zumindest einen weiteren Funktionsteilhalter für einen weiteren Funktionsteiltyp und/oder zumindest ein Platzhalterelement aufweist, und dass die Spritzgießvorrichtung eine Wechselvorrichtung umfasst, mit der der erste Funktionsteilhalter und der zumindest eine weitere Funktionsteilhalter und/oder das Platzhalterelement als Platzhalter für einen Funktionsteilhalter wahlweise in ihre jeweilige Gebrauchsstellung an dem Formhohlraum positionierbar sind.

Ist ein Modellwechsel geplant, kann mithilfe der Wechselvorrichtung von dem einen Funktionsteilhalter auf den anderen Funktionsteilhalter gewechselt werden. Dazu wird der andere Funktionsteilhalter mithilfe der Wechselvorrichtung in seine Gebrauchsstellung an dem Formhohlraum positioniert. Die Funktionsteilhalter dienen dazu, Funktionsteile, an die ein Kunststoffformteil angespritzt werden soll, um ein Mehrkomponenten-Teil herzustellen, in ihrer für den Spritzgießschritt erforderlichen Spritzgießposition zu halten. In ihrer Spritzposition ragen die zu umspritzenden Funktionsteile zumindest bereichsweise in den zumindest einen Formhohlraum der Spritzgießvorrichtung hinein.

Da jeder der zumindest zwei unterschiedlichen Funktionsteilhalter jeweils auf einen bestimmten Funktionsteiltyp abgestimmt ist, ist es mithilfe der Wechselvorrichtung der Spritzgießvorrichtung nun möglich, diese quasi per Knopfdruck zur Herstellung eines anderen Mehrkomponenten-Teils umzurüsten, bei dem Funktionsteile des anderen Funktionsteiltyps umspritzt werden.

Die erfindungsgemäße Spritzgießvorrichtung hat aber auch Vorteile hinsichtlich des Umweltschutzes und des Recyclings. Insbesondere bei der Inbetriebnahme, bei Reparaturen oder Umrüstvorgängen an Spritzgießvorrichtungen der eingangs genannten Art ist es oftmals günstig, diese nicht zu stoppen, wodurch sie abkühlen würden, sondern weiter zu betreiben und dabei in Kauf zu nehmen, dass Ausschuss-Spritzlinge hergestellt werden. Solche Ausschuss-Spritzlinge werden oftmals auch als Vorspritzlinge bezeichnet. Bei den bisher aus der Praxis vorbekannten Spritzgießvorrichtungen, die zur Herstellung von Mehrkomponenten-Teilen verwendet werden, wurden bei der Produktion solcher Vorspritzlinge oftmals auch weiterhin Funktionsteile in die Spritzgießform eingelegt und mit den Kunststoffformteilen umspritzt. Insbesondere in den zuvor genannten Situationen, also bei der Inbetriebnahme, beim Anfahren, bei Reparaturen oder Umrüstvorgängen derartiger Spritzgießvorrichtungen werden so Vorspritzlinge produziert, die aufgrund der festen Verbindung zwischen den Kunststoffformteilen und den Funktionsteilen nur aufwendig zu recyclen sind. Um diese Ausschuss-Spritzlinge ordnungsgemäß recyceln zu können, müssen die Funktionsteile, die oftmals aus Metall bestehen, von den Kunststoffformteilen getrennt werden, um diese dann ordnungsgemäß separat voneinander dem Recycling zuführen zu können.

Diese Ausschussproduktion, bei der an sich ordnungsgemäße Funktionsteile mit durch den Anfahrprozess noch nicht ordnungsgemäßen Kunststoffformteilen verbunden werden, verursacht unnötige Kosten und stellt eine vermeidbare Materialverschwendung dar.

Mithilfe der Spritzgießvorrichtung lässt sich verhindern, dass im Falle der Ausschussproduktion überhaupt Funktionsteile mit Kunststoffformteilen umspritzt werden. Hierzu wird das Platzhalterelement mithilfe der Wechselvorrichtung in seine Gebrauchsstellung an dem Formhohlraum positioniert und ersetzt dort einen Funktionsteilhalter mit einem Funktionsteil. Das Platzhalterelement hat dann die Funktion, den Formhohlraum zu verschließen. Das Platzhalterelement hält dabei kein Funktionsteil, sondern kann in seiner Gebrauchsstellung vor einer Öffnung des Formhohlraums platziert werden, durch die ein Funktionsteil zumindest bereichsweise in den Formhohlraum hineinragen würde. Im besten Fall fungiert das Platzhalterelement als Verschlusselement, das den Formhohlraum im Falle der Ausschussproduktion oder Vorproduktion nach außen hin abschließt, insbesondere abdichtet. Auf diese Weise ist es möglich, die Spritzgießvorrichtung weiter zu betreiben und solange Vorspritzlinge ohne die teuren Funktionsteile zu produzieren, bis der ordnungsgemäße Betrieb der Spritzgießvorrichtung aufgenommen werden kann. Da sich die Qualität von in Zuführkanälen der Spritzgießvorrichtung befindlichem Kunststoff verschlechtern kann, wenn die Spritzgießvorrichtung angehalten wird, ist es häufig günstiger, derartige Ausschuss-Spritzlinge oder Vorspritzlinge ohne Funktionsteile zu produzieren, als die ganze Spritzgießvorrichtung zu stoppen. Ferner lässt sich durch den fortlaufenden Betrieb der Spritzgießvorrichtung vermeiden, dass Kunststoff innerhalb der Zuführkanäle aushärtet, was die Nutzung der Spritzgießvorrichtung verhindern würde.

Die Wechselvorrichtung umfasst erfindungsgemäß eine Drehhalterung, der der zumindest eine erste Funktionsteilhalter und der zumindest eine weitere Funktionsteilhalter und das wenigstens eine Platzhalterelement angeordnet und/oder ausgebildet sind. Mithilfe der Drehhalterung kann dann wahlweise einer der beiden Funktionsteilhalter und/oder der zumindest eine erste Platzhalter und das wenigstens eine Platzhalterelement in seine Gebrauchsstellung an dem Formhohlraum positioniert werden.

Die Wechselvorrichtung weist erfindungsgemäß eine Antriebsvorrichtung für ihre zumindest eine Drehhalterung auf. Die Antriebsvorrichtung kann einen Antriebsriemen umfassen, über den ein Antriebsmotor der Antriebsvorrichtung mit der zumindest einen Drehhalterung verbunden ist. Bei einer Ausführungsform der Spritzgießvorrichtung weist diese mehrere Drehhalterungen auf. Dies ist insbesondere dann vorteilhaft, wenn die Spritzgießform der Spritzgießvorrichtung als Mehrfachform ausgebildet ist, mit der mehrere Mehrkomponenten-Teile gleichzeitig gespritzt werden können. In diesem Zusammenhang kann es vorteilhaft sein, wenn die zuvor bereits erwähnte Antriebsvorrichtung einen Antriebsriemen umfasst, über den der Antriebsmotor der Antriebsvorrichtung mit mehreren oder gar allen Drehhalterungen verbunden ist. Auf diese Weise können mehrere oder gar alle Drehhalterungen mit ein und demselben Antriebsmotor betrieben werden, um den zumindest einen ersten Funktionsteilhalter und den zumindest einen weiteren Funktionsteilhalter und/oder das wenigstens eine Platzhalterelement je nach Bedarf in ihre Gebrauchsstellung an dem Formhohlraum zu positionieren, dem sie jeweils zugeordnet sind.

Die Wechselvorrichtung kann ferner eine Arretiervorrichtung aufweisen, mit der die zumindest eine Drehhalterung in einer gewählten Drehstellung festlegbar ist. Die Arretiervorrichtung kann beispielsweise einen Rasthebel mit zumindest einem Rastelement aufweisen, der in Arretierstellung der Arretiervorrichtung in ein entsprechendes Gegenrastelement an der Drehhalterung eingreift.

Die mit dem Kunststoffformteil umspritzten Funktionsteile können beispielsweise Nadeln oder Hohlnadeln für Spritzen sein. Die zuvor erwähnten Funktionsteilhalter können dementsprechend als Nadelhalter ausgebildet sein, wobei der erste Funktionsteilhalter auf einen ersten Nadeldurchmesser und der zumindest eine weitere Funktionsteilhalter auf einen anderen Nadeldurchmesser abgestimmt sein kann. Auf diese Weise ist es besonders einfach möglich, die Spritzgießvorrichtung zur Herstellung von Spritzen mit Nadeln eines Durchmessers für die Herstellung von Spritzen mit Nadeln eines anderen Durchmessers umzurüsten.

Ferner kann es ferner vorteilhaft sein, wenn die Spritzgießvorrichtung für jeden Formhohlraum der Spritzgießform jeweils öffenbare Formeinsätze aufweist. Die Formeinsätze können dazu dienen, einen vorderen Teil der herzustellenden Mehrkomponenten-Teile zu definieren. Die öffenbaren Formeinsätze erlauben es, Kunststoffformteile mit Schrägen oder Hinterschneidungen zu spritzen und zu entformen.

Die Spritzgießform kann zumindest drei Formplatten aufweisen, die zwischen einer geschlossenen Spritzposition und einer Bearbeitungsposition mit jeweils zueinander beabstandeten Formplatten verstellbar sind. Dabei kann der Formhohlraum zwischen zwei benachbarten Formplatten ausgebildet sein, während der zumindest eine erste Funktionsteilhalter und der zumindest eine weitere Funktionsteilhalter und/oder das zumindest eine Platzhalterelement an der dritten Formplatte angeordnet sein können.

Die Wechselvorrichtung kann an der zuvor erwähnten dritten Formplatte, insbesondere an einer den übrigen beiden Formplatten abgewandten Rückseite der dritten Formplatte, angeordnet sein.

Der zumindest eine erste Funktionsteilhalter und/oder der zumindest eine weitere Funktionsteilhalter können jeweils einen Einführtrichter zum Einführen eines Funktionsteils aufweisen. Ein derartiger Einführtrichter begünstigt das automatisierte Einführen eines Funktionsteils in den Funktionsteilhalter.

Ferner können der zumindest eine erste Funktionshalter und/oder der zumindest eine weitere Funktionsteilhalter jeweils eine Klemmhülse umfassen und/oder als Klemmhülse ausgebildet sein. Klemmhülsen eignen sich insbesondere dazu, empfindliche Funktionsteile in Form von Nadeln oder Hohlnadeln für Spritzen zum Anspritzen eines Kunststoffformteils zu fixieren, um diese in einer ordnungsgemäßen Spritzposition halten zu können.

Die Spritzgießvorrichtung kann ferner eine Klemmvorrichtung aufweisen. Mithilfe der Klemmvorrichtung können Funktionsteile, die in dem zumindest einen ersten Funktionsteilhalter und/oder in dem zumindest einen weiteren Funktionsteilhalter gehalten sind, festgeklemmt werden. Auf diese Weise lassen sich die Positionen der Funktionsteile in den Funktionsteilhaltern zuverlässig festlegen, um anschließend die Kunststoffformteile an die fixierten Funktionsteile anspritzen zu können.

Die Klemmhülse kann einen Klemmschlitz aufweisen, der vorzugsweise in Längsrichtung der Klemmhülse verlaufen kann. Der Klemmschlitz dient dazu, die Klemmhülse durch insbesondere radial auf diese aufgebrachten Druck vergleichsweise einfach verformen zu können, um ein in die Klemmhülse eingestecktes Funktionsteil mit dieser festklemmen zu können. Der Klemmschlitz kann im Bereich seiner beiden Enden zur Materialschwächung der Klemmhülse jeweils eine Erweiterung aufweisen. Im Bereich der Enden des Klemmschlitzes kann das Material der Klemmhülse somit vergleichsweise dünn sein, was die Verformbarkeit der Klemmhülse begünstigen kann. So kann ein Klemmabschnitt der Klemmhülse, der zwischen den beiden Erweiterungen an den Enden des Klemmschlitzes angeordnet oder ausgebildet ist und/oder durch diese definiert wird, durch auf die Klemmhülse aufgebrachten Druck vergleichsweise einfach und vor allem definiert verformt werden.

Die Klemmhülse kann somit einen Klemmabschnitt aufweisen, der eine außenseitige Druckfläche umfasst, die zur Verengung einer Funktionsteilaufnahme der Klemmhülse mit einem Klemmstempel der Klemmvorrichtung der Spritzgießvorrichtung beaufschlagbar ist.

Zum Festklemmen eines Funktionsteiles kann dieses in die Funktionsteilaufnahme der Klemmhülse des Funktionsteilhalters eingeschoben werden. Durch den in Längsrichtung der Klemmhülse verlaufenden Klemmschlitz lässt sich die Funktionsteilaufnahme verengen, indem die außenseitige Druckfläche des Klemmabschnitts der Klemmhülse mit dem Klemmstempel der Klemmvorrichtung von außen beaufschlagt wird. Dabei kann der Klemmstempel vorzugsweise quer oder radial zur Längsrichtung der Klemmhülse zugestellt werden.

Die Spritzgießvorrichtung kann ferner eine Funktionsteileinlegevorrichtung aufweisen. Mithilfe der Funktionsteileinlegevorrichtung ist es möglich, die Funktionsteile in den zumindest einen ersten Funktionsteilhalter und/oder in den zumindest einen weiteren Funktionsteilhalter einzulegen. Die Funktionsteileinlegevorrichtung kann als Handhabungsgreifer ausgebildet sein, mit dem die Funktionsteile den Funktionsteilhaltern der Spritzgießvorrichtung aus einem Funktionsteilvorrat der Spritzgießvorrichtung zugeführt werden können.

Zur Lösung der Aufgabe wird ferner auch ein Verfahren zum Spritzgießen von Mehrkomponententeilen, insbesondere von Spritzen, unter Verwendung einer Spritzgießvorrichtung, insbesondere einer Spritzgießvorrichtung nach einem der auf eine solche gerichteten Ansprüche, vorgeschlagen Kunststoffformteil.

Insbesondere wird bei dem Verfahren somit vorgeschlagen, dass ein Funktionsteil eines ersten Funktionsteiltyps mit einem darauf abgestimmten ersten Funktionsteilhalter wenigstens bereichsweise in einen Formhohlraum der Spritzgießvorrichtung hineinragend in Spritzposition gehalten wird, wenn ein Mehrkomponententeil mit einem Funktionsteil des ersten Funktionsteiltyps hergestellt werden soll. Soll ein Mehrkomponententeil mit einem Funktionsteil des zumindest einen weiteren Funktionsteiltyps hergestellt werden, wird ein Funktionsteil zumindest eines weiteren Funktionsteiltyps mit einem darauf abgestimmten weiteren Funktionsteilträger wenigstens bereichsweise in den Formhohlraum der Spritzgießvorrichtung hineinragend in Spritzposition gehalten Ergänzend oder alternativ dazu wird ein Platzhalterelement als Platzhalter für einen Funktionsteilhalter mit Funktionsteil vor eine Öffnung des Formhohlraums für ein Funktionsteil bewegt, wenn Spritzlinge ohne Funktionsteile hergestellt werden sollen. Dabei werden der erste Funktionsteilhalter und der zumindest eine weitere Funktionsteilhalter und/oder das Platzhalterelement mithilfe einer Wechselvorrichtung der Spritzgießvorrichtung in ihre Gebrauchsstellung positioniert.

Das Verfahren erlaubt somit eine Umrüstung der Spritzgießvorrichtung auf Knopfdruck. So kann die Spritzgießvorrichtung ohne großen Aufwand von der Herstellung von Mehrkomponententeilen mit Funktionsteilen eines Funktionsteiltyps auf die Herstellung von Mehrkomponententeilen eines anderen Funktionsteiltyps umgerüstet werden.

Das erfindungsgemäße Verfahren erlaubt es ferner, die Verschwendung von Funktionsteilen zu vermeiden, wenn die Spritzgießvorrichtung noch nicht in einem ordnungsgemäßen Betriebszustand ist, die Spritzgießvorrichtung jedoch nicht angehalten werden soll oder kann. Die hierbei zwangsweise entstehenden Vorspritzlinge oder Ausschuss-Spritzlinge können aufgrund des bereits zuvor ausführlich erläuterten Platzhalterelements auch ohne die teuren Funktionsteile produziert werden. Die hierbei entstehenden Ausschuss-Spritzlinge weisen keine schwer von diesen trennbaren und vergleichsweise teuren Funktionsteile auf und können daher ohne aufwändige Trennmaßnahmen Kunststoffformteildirekt dem Recycling zugeführt werden.

Zur Lösung der Aufgabe wird ferner die Verwendung eines Platzhalterelements an einer Spritzgießvorrichtung gemäß dem unabhängigen, auf eine derartige Verwendung gerichteten Anspruchs vorgeschlagen. Das Platzhalterelement wird hierbei als Platzhalter anstelle eines Funktionsteilhalters vor einen Formhohlraum der Spritzgießform der Spritzgießvorrichtung verwendet, wenn Spritzlinge ohne Funktionsteil hergestellt werden sollen. Das Platzhalterelement kann hierbei anstelle eines Funktionsteilhalters vor eine Öffnung des Formhohlraums für die Funktionsteile bewegt werden, um auf der Spritzgießvorrichtung Vorspritzlinge ohne Funktionsteile zu produzieren. Das Platzhalterelement dient dazu, die Spritzgießvorrichtung auch dann noch weiterbetreiben zu können, wenn keine Funktionsteile mit Kunststoffformteilen umspritzt werden sollen.

Zur Lösung der Aufgabe wird schließlich auch ein Computerprogramm vorgeschlagen, das die Mittel und Merkmale des unabhängigen, auf ein solches Computerprogramm gerichteten Anspruchs aufweist. Zur Lösung der Aufgabe wird somit insbesondere ein Computerprogramm vorgeschlagen, das Befehle umfasst, die bewirken, dass die Spritzgießvorrichtung nach einem der Ansprüche 1 bis 13 das Verfahren nach Anspruch 14 ausführt.

Das Computerprogramm kann hierbei auf einem computerlesbaren Medium gemäß dem unabhängigen, auf ein derartiges computerlesbares Medium gerichteten Anspruchs gespeichert sein.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination der Merkmale einzelner oder mehrerer Schutzansprüche untereinander und/oder in Kombination einzelner oder mehrerer Merkmale des Ausführungsbeispiels.

Es zeigen in teilweise stark schematisierter Darstellung:
- Figur 1: eine perspektivische, teilausgebrochene Darstellung einer Spritzgießvorrichtung, wobei eine Spritzgießform der Spritzgießvorrichtung zu erkennen ist, die insgesamt drei in Bearbeitungspositionen befindliche und jeweils voneinander beabstandete Formplatten aufweist,
- Figur 2: die in Figur 1 mit dem Buchstaben A markierte Einzelheit in vergrößerter Darstellung,
- Figur 3: eine perspektivische, teilausgebrochene Darstellung der in den vorherigen Figuren dargestellten Spritzgießvorrichtung,
- Figur 4: die in Figur 3 mit dem Buchstaben B markierte Einzelheit in vergrößerter Darstellung, wobei hier vier Drehhalterungen einer Wechselvorrichtung der Spritzgießvorrichtung mit jeweils drei unterschiedlichen Funktionsteilhaltern und einem Platzhalterelement zu erkennen sind,
- Figur 5: eine teilausgebrochene Darstellung einer der in den vorherigen Figuren gezeigten Drehhalterungen zur Veranschaulichung der Funktionsweise einer Klemmvorrichtung der Spritzgießvorrichtung mit in Klemmstellung befindlichem Klemmstempel,
- Figur 6: die in Figur 5 gezeigte Drehhalterung mit gelöstem Klemmstempel der Klemmvorrichtung, wobei hier anstelle eines Funktionsteilhalters (vergleiche Figur 5) ein Platzhalterelement in seiner Gebrauchsstellung zu erkennen ist,
- Figur 7: die in Figur 5 mit dem Buchstaben C markierte Einzelheit in vergrößerter Darstellung, wobei hier der Funktionsteilhalter als Klemmhülse ausgebildet ist und ein Einführtrichter des Funktionsteilhalters sowie eine in dem Funktionsteilhalter ausgebildete Funktionsteilaufnahme sowie ein das Material des Funktionsteilhalters schwächender Klemmschlitz zu erkennen sind,
- Figur 8: der Funktionsteilhalter aus den Figuren 5 und 7 in vergrößerter Darstellung, wobei hier besonders gut zu erkennen ist, dass der Funktionsteilhalter als geschlitzte Klemmhülse ausgebildet ist,
- Figur 9: das in Figur 6 im Schnitt dargestellte Platzhalterelement in perspektivische Ansicht,
- Figur 10: eine stark schematisierte und geschnittene Seitenansicht der Spritzgießvorrichtung zur Veranschaulichung des Einsetzens von Funktionsteilen in den Funktionsteilhalter und der Funktionsweise der Klemmvorrichtung, wobei ein Funktionsteil in Form einer Hohlnadel mithilfe eines Funktionsteilhalters durch eine stirnseitige Einführöffnung mit einem Einführtrichter des Funktionsteilhalters eingeführt wurde, während ein Klemmstempel der Klemmvorrichtung in Offenstellung angeordnet ist,
- Figur 11: eine Figur 10 ähnelnde Schnittdarstellung der in Figur 10 gezeigten Elemente, wobei hier die Funktionsteileinlegevorrichtung nach Einbringen des Funktionsteils in den Funktionsteilhalter bereits wieder ein Stück zurückgezogen ist, während das Funktionsteil mithilfe des Klemmstempels der Klemmvorrichtung festgeklemmt und somit fixiert wird, so dass die Funktionsteileinlegevorrichtung von dem Funktionsteil abgezogen werden kann,
- Figur 12: eine stark schematisierte, geschnittene Ansicht der Spritzgießform, wobei hier bereits eine erste Formplatte mit einer Heißkanaldüse und einem Spritzendorn, eine zweite Formplatte mit einer Teilkavität für den Spritzenzylinder und Teile einer dritten Formplatte, die bereits in den Figuren 10 und 11 dargestellt war, zu erkennen sind,
- Figur 13: eine geschnittene Ansicht der geschlossenen Spritzgießform kurz vor Einspritzen des Kunststoffes zum Anspritzen des Kunststoffformteiles an das eingelegte Funktionsteil, wobei das Einlegeteil mithilfe des Spritzendornes in seine Spritzposition geschoben wurde, und wobei der Klemmstempel mit einer vergleichsweise hohen Kraft auf den Funktionsteilhalter und das darin eingeklemmte Funktionsteil drückt, um dieses in der für das ordnungsgemäße Spritzen erforderlichen Position zu halten,
- Figur 14: die zum Entformen des fertigen Mehrkomponententeils bereits teilgeöffnete Spritzgießform, wobei hier der Klemmstempel in einer gelösten Position oder Offenstellung angeordnet ist, sowie
- Figur 15: eine Schnittdarstellung der in den vorherigen Figuren bereits gezeigten Spritzgießform mit in Spritzstellung befindlichen Formplatten, wobei hier anstelle eines Funktionsteilhalters das Platzhalterelement in seiner Gebrauchsstellung an dem Formhohlraum zu erkennen ist, um Vorspritzlinge ohne Funktionsteile zu produzieren und so die Verschwendung von Funktionsteilen bei der Herstellung von Ausschuss-Spritzlingen zu vermeiden.

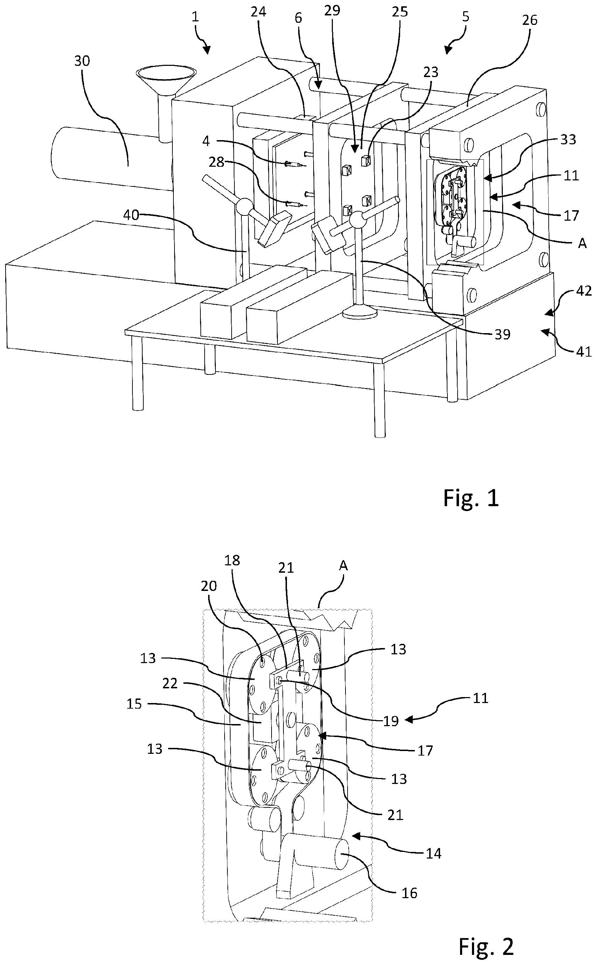

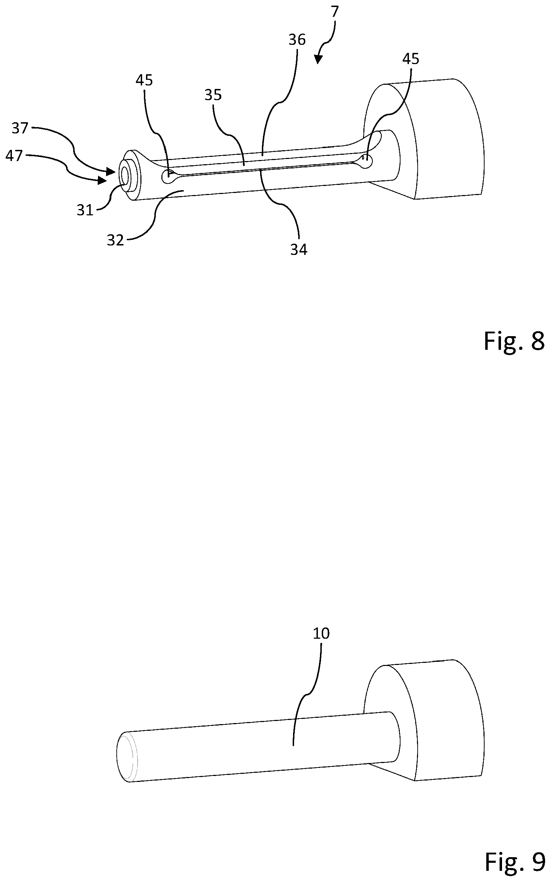

Die Figuren 1 bis 15 zeigen zumindest Teile einer im Ganzen mit 1 bezeichneten Spritzgießvorrichtung.

Die Spritzgießvorrichtung 1 dient dazu, Kunststoffformteile 2 an Funktionsteile 3 zur Herstellung von Mehrkomponententeilen 4 anzuspritzen.

Im vorliegenden Ausführungsbeispiel dient die Spritzgießvorrichtung 1 dazu, den Spritzenzylinder 2 aus Kunststoff an Nadeln oder Hohlnadeln 3 zur Bildung von Spritzen 4 anzuspritzen.

Die Spritzgießvorrichtung 1 weist dazu eine Spritzgießform 5 auf, die zumindest ein Formhohlraum 6 aufweist oder definiert. Der Formhohlraum 6 dient zur bereichsweisen Aufnahme eines Funktionsteils 3 und zum Anspritzen des Kunststoffformteils 2 an das Funktionsteil 3 zur Bildung des Mehrkomponententeils 4.

Die Spritzgießform 5 der Spritzgießvorrichtung 1 ist als Mehrfach-Spritzgießform ausgebildet und weist im gezeigten Ausführungsbeispiel insgesamt vier Formhohlräume 6 auf.

Für jeden der Formhohlräume 6 weist die Spritzgießvorrichtung 1 einen ersten Funktionsteilhalter 7 für einen ersten Funktionsteiltyp, einen zweiten Funktionsteilhalter 8 für einen zweiten Funktionsteiltyp und einen dritten Funktionsteilhalter 9 für einen dritten Funktionsteiltyp sowie ein Platzhalterelement 10 auf. Das Platzhalterelement 10 kann anstelle eines jeden Funktionsteilhalters 7, 8, 9 vor den ihm zugeordneten Formhohlraum 6 positioniert werden, wenn Vorspritzlinge ohne Funktionsteil 3 hergestellt werden sollen.

Dies wird beispielsweise beim Anfahren der Spritzgießvorrichtung 1 solange gemacht, bis die Spritzgießvorrichtung 1 ihre Betriebstemperatur erreicht hat und die Mehrkomponententeile 4 mit der erforderlichen Güte herstellen kann.

Die Spritzgießvorrichtung 1 ist mit einer Wechselvorrichtung 11 ausgestattet, mit der der erste Funktionsteilhalter 7, der zweite Funktionsteilhalter 8, der dritte Funktionsteilhalter 9 sowie das Platzhalterelement 10 wahlweise in ihre jeweilige Gebrauchsstellung an dem Formhohlraum 6, dem sie zugeordnet sind, positioniert werden können.

Als Funktionsteile 3 werden im gezeigten Ausführungsbeispiel Hohlnadeln 3 verwendet, die an ihrem distalen Ende einen Schliff aufweisen. An eine Hohlnadel 3 wird ein Kunststoffformteil 2 in Form eines Spritzenzylinders angespritzt, um ein Mehrkomponententeil 4 in Form einer Spritze zu erzeugen.

Jeder der drei unterschiedlichen Funktionsteilhalter 7, 8 und 9 dient dazu, einen bestimmten Nadeltyp also Funktionsteiltyp aufzunehmen. Dabei können sich die mit den Funktionsteilhaltern 7, 8 und 9 aufnehmbaren Funktionsteile 3 beispielsweise hinsichtlich ihres Durchmessers und/oder ihrer Länge voneinander unterscheiden.

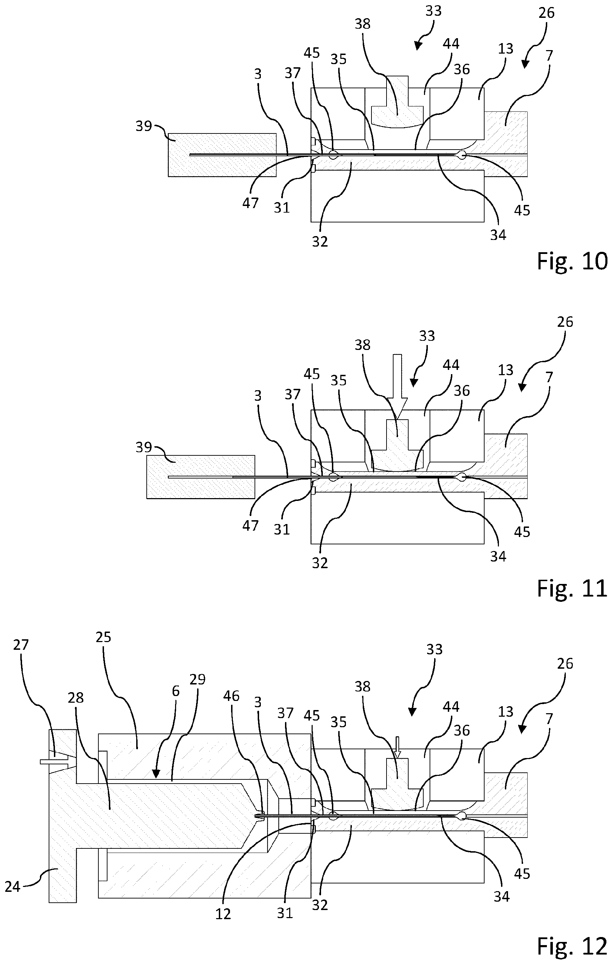

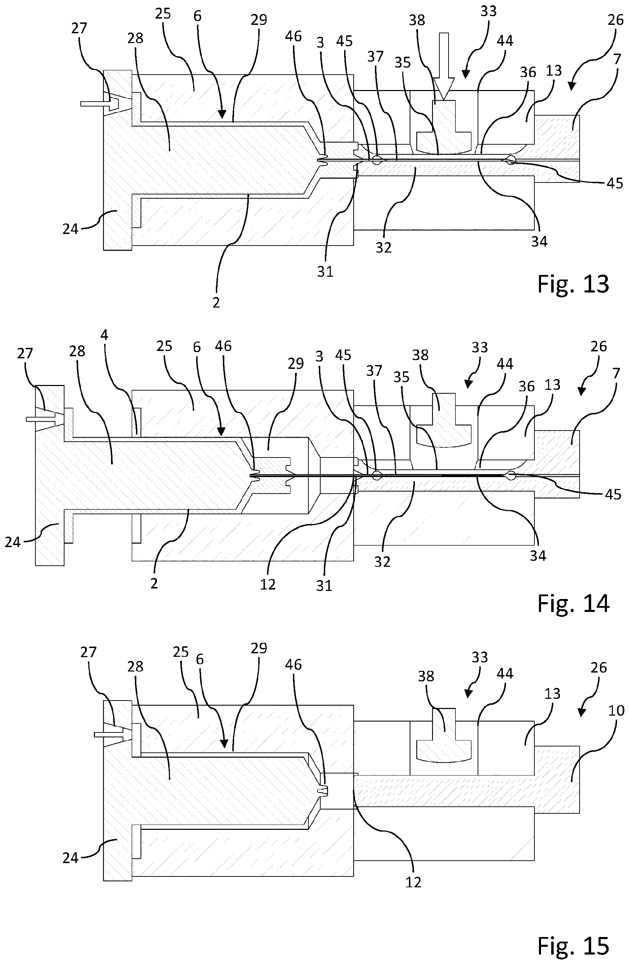

Die Funktion der Funktionsteilhalter 7, 8 und 9 ist gut anhand der Figuren 10 bis 14 zu erkennen. Sie werden dazu verwendet, Funktionsteile 3, hier Hohlnadeln 3 für die Herstellung von Spritzen 4, beim Anspritzen eines Kunststoffformteils 2 in Form eines Spritzenzylinders an die Funktionsteile 3 in ihrer Spritzposition zu halten. Figur 13 zeigt den ersten Funktionsteilhalter 7 in seiner Gebrauchsstellung vor dem Formhohlraum 6, wobei er eine Hohlnadel 3 als Funktionsteil 3 in ihrer Spritzposition fixiert, so dass sie zumindest bereichsweise in den Formhohlraum 6 Spritzgießform 5 hineinragt, um anschließend mit Kunststoff unter Ausbildung eines Spritzenzylinders als Kunststoffformteil 2 umspritzt zu werden.

Figur 15 zeigt das Platzhalterelement 10 in seiner Gebrauchsstellung als Platzhalter für einen der Funktionsteilhalter 7, 8, 9 vor dem Formhohlraum 6 der Spritzgießform 5. Hierbei verdeckt das Platzhalterelement 10 eine Öffnung 12 des Formhohlraums 6 für das Funktionsteil 3 und schließt diese nach außen hin ab.

Die Wechselvorrichtung 11 umfasst insgesamt vier Drehhalterungen 13. An jeder der Drehhalterungen 13 ist jeweils ein erster Funktionsteilhalter 7, ein zweiter Funktionsteilhalter 8, ein dritter Funktionsteilhalter 9 sowie ein Platzhalterelement 10 angeordnet.

Die Spritzgießvorrichtung 1 umfasst eine Antriebsvorrichtung 14 für die Drehhalterungen 13. Die Antriebsvorrichtung 14 weist einen Antriebsriemen 15 auf, über den ein Antriebsmotor 16 der Antriebsvorrichtung 14 mit den Drehhalterungen 13 verbunden ist. Über den Antriebsriemen 15 kann die Antriebskraft des Antriebsmotors 16 auf alle Drehhalterungen 13 übertragen werden. So können die Drehhalterungen 13 mithilfe eines einzigen Antriebsmotors 16 simultan verstellt werden.

Die Spritzgießvorrichtung 1 umfasst ferner eine Arretiervorrichtung 17, die besonders gut in der vergrößerten Detailansicht der Einzelheit A gemäß Figur 2 zu erkennen ist. Die Arretiervorrichtung 17 dient dazu, die Drehhalterungen 13 in einer gewählten Drehstellung zu arretieren.

Die Arretiervorrichtung 17 umfasst einen Arretierhebel 18, an dem vier Arretierbolzen 19 angeordnet sind. Die Drehhalterungen 3 weisen an ihrer dem Arretierhebel 18zugewandten Rückseite jeweils vier Arretierlöcher 20 für die Arretierbolzen 19 auf. Die vier Arretierlöcher 20 einer Drehhalterung 13 sind gleichmäßig um eine Rotationachse der Drehhalterung 13 an der Rückseite der Drehhaltung 13 versetzt zueinander angeordnet und definieren jeweils eine Drehposition der Drehhalterung 13. An einer Rückseite des Arretierhebels 18, die den Arretierbolzen 19 abgewandt ist, sind zwei Führungsbolzen 21 zu erkennen. Sie dienen dazu, die durch einen Hubzylinder 22 der Arretiervorrichtung 17 verursachte Hubbewegung des Arretierhebels 18 zum Arretieren bzw. zum Freigeben der Drehhalterungen 13 zu führen.

Insbesondere Figur 1 zeigt, dass die Spritzgießvorrichtung 1 für jeden ihrer insgesamt vier Formhohlräume 6 jeweils öffenbare Formeinsätze 23 aufweist. Sie dienen dazu, einen vorderen Teil der herzustellenden Mehrkomponententeile 4, hier der Spritzen 4 zu definieren. Die öffenbaren Formeinsätze 23 erlauben es, Kunststoffformteile 2 mit Schrägen oder Hinterschneidungen zu spritzen.

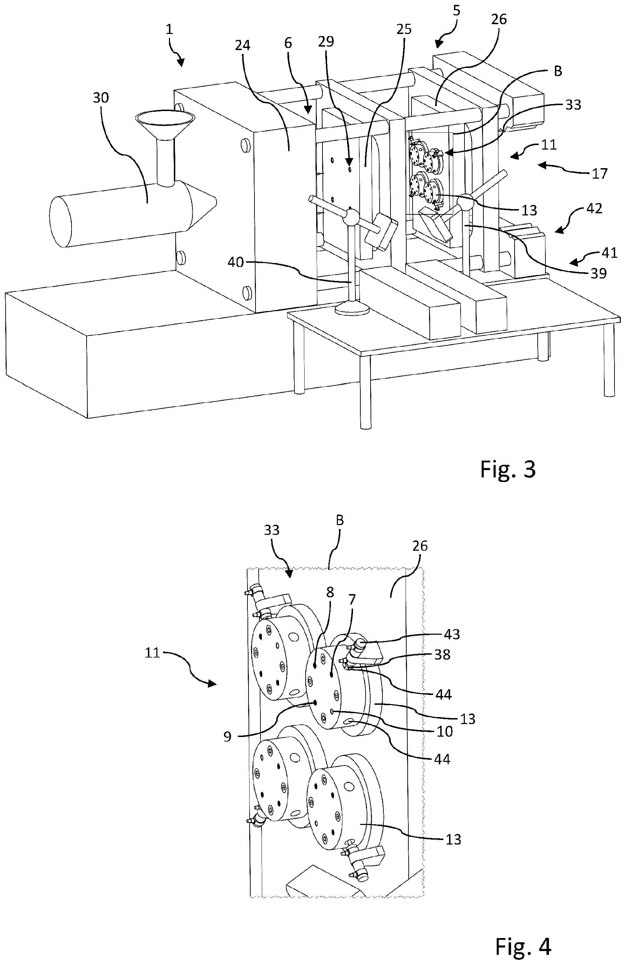

Die Spritzgießform 5 umfasst insgesamt drei Formplatten 24, 25 und 26. Die Formplatten 24, 25 und 26 können zwischen einer geschlossenen Spritzposition (siehe z.B. Figuren 13 und 15) und einer Bearbeitungsposition mit jeweils zueinander beabstandeten Formplatten 24, 25 und 26 (siehe z. B. Figuren 1 und 3) verstellt werden. Die Formhohlräume 6 sind dabei zwischen der auch als düsenseitigen Formplatte 24 zu bezeichnenden Formplatte 24 und der mittleren Formplatte 25 ausgebildet. An der dritten Formplatte 26 sind die Funktionsteilhalter 7, 8, 9 und die Platzhalterelemente 10 angeordnet. Auch die Wechselvorrichtung 11 der Spritzgießvorrichtung ist an der dritten Formplatte 26 und hier an einer den übrigen beiden Formplatten 24 und 25 abgewandten Rückseite der dritten Formplatte 26 angeordnet.

Die Figuren 12 bis 15 zeigen ferner, dass die düsenseitige Formplatte 24 außer Heißkanaldüsen 27 auch Spritzendorne 28 aufweist. Die Spritzendorne 28 sind bei geschlossenen oder in Spritzposition befindlichen Formplatten 24, 25 und 26 in korrespondierend ausgebildete Teilkavitäten 29 der mittleren Formplatte 25 eingefahren und geben die Form der an die Einlegeteile 3, hier die Hohlnadeln 3, anzuspritzenden Spritzenzylinder 2 vor.

Die Spritzgießvorrichtung 1 verfügt über ein Spritzaggregat 30, das über ein entsprechendes Heißkanalsystem mit den Heißkanaldüsen 27 in der düsenseitigen Formplatte 24 verbunden ist.

Die Funktionsteilhalter 7, 8 und 9 weisen jeweils einen Einführtrichter 31 zum Einführen der Funktionsteile 3 in die Funktionsteilhalter 7, 8, 9 auf. Ferner umfasst jeder der Funktionsteilhalter 8, 9 zudem eine Klemmenhülse 32 bzw. ist als solche ausgebildet. Durch die Einführtrichter 31 gelangen die Funktionsteile 3 somit in die Klemmhülsen 32 der Funktionsteilhalter 7, 8, 9.

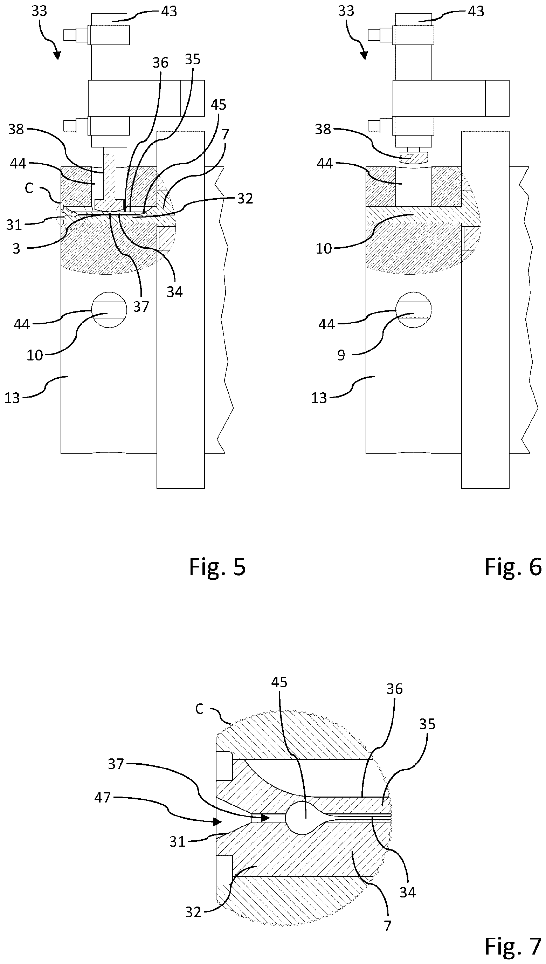

Die Spritzgießvorrichtung 1 weist eine Klemmvorrichtung 33 auf. Mithilfe der Klemmvorrichtung 33 können die Funktionsteile 3 in den Klemmhülsen 32 der Funktionsteilhalter 7, 8 und 9 festgeklemmt werden. Die als Klemmhülsen 32 weisen jeweils einen in Längsrichtung der jeweiligen Klemmhülse 32 verlaufenden Klemmschlitz 34 auf. Ein solcher Klemmschlitz 34 ist besonders gut in den Figuren 5 bis 8 zu erkennen. Der Klemmschlitz 34 weist im Bereich seiner beiden Enden jeweils eine Erweiterung 45 zur Materialschwächung der Klemmhülse 32 auf und erlaubt es, diese vergleichsweise einfach reversibel zu verformen. Die Klemmhülse 32 ist mit einem Klemmabschnitt 35 versehen, der zwischen den beiden Erweiterungen 45 des Klemmschlitzes 34 ausgebildet ist. Der Klemmabschnitt 35 weist eine außenseitige Druckfläche 36 auf. Zur Verengung einer Funktionsteilaufnahme 37 der Klemmhülse 32, in die die als Hohlnadeln ausgebildeten Funktionsteile 3 eingeschoben werden können, kann diese außenseitige Druckfläche 36 des Klemmabschnitts 35 der Klemmhülse 32 mit einem Klemmstempel 38 der Klemmvorrichtung 33 beaufschlagt werden.

Zur Betätigung der Klemmstempels 38 weist die Klemmvorrichtung 33 für jeden Klemmstempel 38 jeweils einen Druckzylinder 43 auf. Die Klemmstempel 38 werden jeweils durch eine Einführöffnung 44 an den Drehhalterungen 13 zugestellt. Jede Drehalterung 13 weist zumindest für jeden der drei Funktionsteilhalter 7, 8, 9 jeweils eine derartige Einführöffnung 44 auf.

Die Spritzendorne 28 verfügen an ihrem jeweiligen distalen Ende über eine Aufnahmevertiefung 46. Sie dient dazu, ein proximales Ende eines Funktionsteils 3 zu erfassen. Die Figuren 12 bis 14 verdeutlichen, dass die Funktionsteile 3 mithilfe der Spritzendorne 28 und ihrer Aufnahmevertiefungen 46 beim Schließen der Spritzgießform 5 in ihre Spritzposition bewegt werden.

Die Aufnahmevertiefungen 46 stellen ferner sicher, dass die Hohlnadeln 3 an der fertigen Spritze 4 durchgängig bleiben, also nicht mit Kunststoffmaterial beim Spritzen des Spritzenzylinders 2 zugesetzt werden.

Die Spritzgießvorrichtung 1 weist außerdem eine Funktionsteileinlegevorrichtung 39 auf. Mit der Funktionsteileinlegevorrichtung 39 können die Funktionsteile 3 in Klemmhülsen 32 der Funktionsteilhalter 7, 8 und 9 eingelegt werden, je nachdem welcher Funktionsteilhalter 7, 8 und 9 in Gebrauchsstellung angeordnet ist.

Die Funktionsteileinlegevorrichtung 39 ist dazu eingerichtet, vier Funktionsteile 3 gleichzeitig in die Funktionsteilhalter 7, 8, 9 und ihre Klemmhülsen 32 einzulegen.

Mithilfe eines Entnahmegreifers 40 können vier fertige Mehrkomponententeile 4, hier also Spritzen, der Spritzgießform 5 gleichzeitig entnommen werden.

Auf der zuvor beschriebenen Spritzgießvorrichtung 1 lässt sich das nachfolgend beschriebene Verfahren ausführen. Hierbei wird ein Funktionsteil 3 eines ersten Funktionsteiltyps mit einem darauf abgestimmten ersten Funktionsteilhalter 7 wenigstens bereichsweise in einen Formhohlraum 6 der Spritzgießvorrichtung 1 hineinragend in Spritzposition gehalten, wenn ein Mehrkomponententeil 4 mit einem Funktionsteil 3 des ersten Funktionsteiltyps hergestellt werden soll. Ein Funktionsteil 3 zumindest eines weiteren Funktionsteiltyps kann mithilfe zumindest eines weiteren, darauf abgestimmten Funktionsteilhalters 8, 9 wenigstens bereichsweise in den Formhohlraum 6 hineinragend in Spritzposition gehalten werden, wenn ein Mehrkomponententeil 4 mit einem Funktionsteil 3 des weiteren Funktionsteiltyps hergestellt werden soll.

Beim Anfahren der Spritzgießvorrichtung oder nach längeren Spritzpausen kann es passieren, dass die Spritzgießform zu kalt ist, um die gewünschte hohe Qualität der Spritzlinge zu gewährleisten. Die Spritzgießform könnte zwar vorgewärmt werden, was jedoch zusätzliche Heizaggregate erfordert und somit aufwändig und teuer ist. Zudem kann es schwierig sein, den Temperaturverlauf eines regulären Spritzzyklus innerhalb der Spritzgießform abzubilden. Es werden daher üblicherweise einige Spritzvorgänge durchgeführt, bis die Spritzgießvorrichtung auf Betriebstemperatur gebracht ist.

Die dabei anfallenden Spritzlinge werden als Vorspritzlinge bezeichnet und müssen aussortiert werden. Da die Funktionsteile 3 Widerhaken, Vorsprünge oder sonstige Bereiche aufweisen können, die eine sichere und feste Verbindung mit dem Kunststoffformteil 2 gewährleisten, ist ein Trennen von Funktionsteil 3 und Spritzmaterial der aussortierten Vorspritzlinge nur mit großem Aufwand möglich, um eine sortenreine Entsorgung oder Verwertung der unterschiedlichen Materialien zu erlauben. Zudem können die Funktionsteile zumeist nicht erneuert werden, was zu hohen Mehrkosten führt.

Diese Problematik wird umgangen, indem anstelle der Funktionsteilhalter 7, 8, 9 das Platzhalterelement 10 vor eine Öffnung 12 des Formhohlraums 6 für ein Funktionsteil 3 bewegt wird, wenn Vorspritzlinge ohne Funktionsteile 3 hergestellt werden sollen.

Die Positionierung der Funktionsteilhalter 7, 8 und 9 und des Platzhalterelements 10 erfolgt hierbei mithilfe der Wechselvorrichtung 11 der Spritzgießvorrichtung 1.

Das Platzhalterelement 10 wird an der Spritzgießvorrichtung 1 somit als Platzhalter anstelle eines Funktionsteilhalters 7, 8 oder 9 mit einem Funktionsteil 3 vor einer Einlegeöffnung 12 des Formhohlraums 6 für die Funktionsteile verwendet, um Vorspritzlinge ohne Funktionsteile 3 herstellen zu können.

Auf der zuvor beschriebenen Spritzgießvorrichtung 1 lässt sich ferner das nachfolgend beschriebene Verfahren ausführen. Hierbei wird ein Funktionsteil 3 in eine Klemmhülse 3 eines der Funktionsteilhalters 7, 8, 9 eingeführt, wonach das Funktionsteil 3 mit der Klemmhülse 32 klemmend in seiner Spritzposition gehalten wird, wobei es zumindest bereichsweise in den einen Formhohlraum 6 einer Spritzgießform 5 der Spritzgießvorrichtung 1 hineinragt.

Das Funktionsteil 3 wird hierbei mit der Funktionsteileinlegevorrichtung 39 der Spritzgießvorrichtung 1, durch eine stirnseitige Einführöffnung 47 des Funktionsteilhalters 7,8,9 in die Funktionsteilaufnahme 37 des Funktionsteilhalters 7,8,9, die zumindest abschnittsweise innerhalb der Klemmhülse 32 verläuft, eingeführt.

Die Klemmhülse 32 wird mit dem Klemmstempel 38 der Klemmvorrichtung 33 beaufschlagt, um das Funktionsteil 3 in der Klemmhülse 32 festzuklemmen. Dabei werden der Klemmschlitz 34 der Klemmhülse 32 und dadurch die Funktionsteilaufnahme 37 des Funktionsteilhalters 7,8,9 verengt. Konkret wird dabei die Druckfläche 36 des Klemmabschnitts 35 der Klemmhülse 32 mit dem Klemmstempel 38 beaufschlagt. Insbesondere die Figuren 10 bis 15 verdeutlichen, dass der Klemmstempel 38 dafür quer zu einer Längserstreckung der Klemmhülse 32 auf diese zugestellt wird.

Figur 10 zeigt, dass der Klemmstempel 38 die Druckfläche 36 der Klemmhülse 32 nicht beaufschlagt, wenn das Funktionsteil 3 mit der Funktionsteileinlegevorrichtung 39 in die Klemmhülse 32 eingeführt wird. Der Klemmstempel 38 befindet sich dann in einer gelösten Position.

Gemäß Figur 11 beaufschlagt der Klemmstempel 38 die Klemmhülse 32 mit einer Rückhaltedruckkraft, wenn das Funktionsteil 3 zumindest ein Stück weit in die Klemmhülse 32 eingeführt ist, wodurch das Funktionsteil 3 in der Klemmhülse 32 zurückgehalten wird, wenn die Funktionsteileinlegevorrichtung 39 in ihre Ausgangsstellung bewegt und von dem Funktionsteil 3 entfernt wird.

Figur 12 veranschaulicht, dass das Funktionsteil 3 durch Schließen der Spritzgießform 5 in seine Spritzposition geschoben wird. Hierbei beaufschlagt der Klemmstempel 38 die Klemmhülse 32 mit einer Druckkraft, die kleiner als die Rückhaltedruckkraft ist, die zum Zurückhalten des Funktionsteils 3 in der Klemmhülse 32 aufgebracht wird, wenn die Funktionsteileinlegevorrichtung 39 von dem Funktionsteil 3 entfernt wird. Mithilfe des leicht an die Klemmhülse 32 angedrückten Klemmstempels 33 kann ein seitliches Ausbrechen des Funktionsteils 3 beim Schließen der Spritzgießform 5 verhindert werden.

Figur 13 zeigt die Spritzgießform 3 kurz nach dem Einspritzen des Kunststoffs zur Ausbildung des Kunststoffformteils 2. Wenn das Kunststoffformteil 2 an das Funktionsteil 3 angespritzt wird, beaufschlagt der Klemmstempel 38 die Klemmhülse 32 mit einer Druckkraft die größer als die Druckkraft ist, die der Klemmstempel 38 auf die Klemmhülse 32 aufbringt, wenn die Spritzgießform 5 geschlossen und dabei das Funktionsteil 3 in seine Spritzposition bewegt wird.

Gemäß den Figuren 14 und 15 befindet sich der Klemmstempel 38 beim Entformen des fertigen Mehrkomponententeils 4 ebenso in einer gelösten Position, wie bei der Verwendung des Platzhalterelements 10 anstelle eines der Funktionsteilhalter 7, 8, 9.

Die Erfindung betrifft ferner ein Computerprogramm, das Befehle umfasst, die bewirken, dass die zuvor beschriebene Spritzgießvorrichtung 1 die zuvor beschriebenen Verfahren und insbesondere das Verfahren gemäß dem Verfahrensanspruch ausführt. Das Computerprogramm ist auf einem computerlesbaren Medium 41 gespeichert, das von einer Steuereinrichtung 42 der Spritzgießvorrichtung 1 ausgelesen werden kann.

Die Erfindung befasst sich mit Verbesserungen auf dem technischen Gebiet der Herstellung von Mehrkomponententeilen 4, die ein Funktionsteil 3, insbesondere eine Hohlnadel, umfassen, an das ein Kunststoffformteil 2, insbesondere ein Spritzenzylinder 2, angespritzt ist. Um die Spritzgießvorrichtung schnell und komfortabel umrüsten zu können, weist diese eine Wechselvorrichtung 11 auf, mit der auf unterschiedliche Funktionsteiltypen abgestimmte Funktionsteilhalter 7, 8, 9 und/oder ein Funktionsteilhalter 8 und ein Platzhalterelement 10 wahlweise in ihre Gebrauchsstellung vor einen Formhohlraum 6 der Spritzgießform 5 der Spritzgießvorrichtung 1 gebracht werden können.

### Bezugszeichenliste

- 1: Spritzgießvorrichtung
- 2: Kunststoffformteil/Spritzenzylinder
- 3: Funktionsteil/Hohlnadel
- 4: Mehrkomponententeil/Spritze
- 5: Spritzgießform
- 6: Formhohlraum
- 7: erster Funktionsteilhalter
- 8: zweiter Funktionsteilhalter
- 9: dritter Funktionsteilhalter
- 10: Platzhalterelement
- 11: Wechselvorrichtung
- 12: Öffnung für 3 in 6
- 13: Drehhalterung
- 14: Antriebsvorrichtung
- 15: Antriebsriemen
- 16: Antriebsmotor
- 17: Arretiervorrichtung
- 18: Arretierhebel
- 19: Arretierbolzen
- 20: Arretierlöcher
- 21: Führungsbolzen
- 22: Hubzylinder
- 23: öffenbarer Formeinsatz
- 24: düsenseitige Formplatte
- 25: mittlere Formplatte
- 26: äußere Formplatte
- 27: Heißkanaldüse
- 28: Spritzendorn
- 29: Teilkavität
- 30: Spritzaggregat
- 31: Einführtrichter an 7,8,9
- 32: Klemmhülse
- 33: Klemmvorrichtung
- 34: Klemmschlitz
- 35: Klemmabschnitt
- 36: Druckfläche
- 37: Funktionsteilaufnahme
- 38: Klemmstempel
- 39: Funktionsteileinlegevorrichtung
- 40: Entnahmegreifer
- 41: computerlesbares Medium
- 42: Steuervorrichtung
- 43: Druckzylinder von 33
- 44: Einführöffnung für 38 in 13
- 45: Erweiterung von 34
- 46: Aufnahmevertiefung an 28 für 3
- 47: stirnseitige Einführöffnung an 7,8,9

## Patentansprüche

1. Spritzgießvorrichtung (1) mit einer Spritzgießform (5), die zumindest einen Formhohlraum (6) zur wenigstens bereichsweisen Aufnahme eines Funktionsteils (3) und zum Anspritzen eines Kunststoffformteils (2) an das Funktionsteil (3) zur Bildung eines Mehrkomponententeils (4), insbesondere einer Spritze (4), aufweist, wobei die Spritzgießvorrichtung (1) zumindest einen ersten Funktionsteilhalter (7) für einen ersten Funktionsteiltyp und zumindest einen weiteren Funktionsteilhalter (8) für einen weiteren Funktionsteiltyp
und/oder zumindest ein Platzhalterelement (10) aufweist, und dass die Spritzgießvorrichtung (1) eine Wechselvorrichtung (11) umfasst, mit der der erste Funktionsteilhalter (7) und der zumindest eine weitere Funktionsteilhalter (8,9) und/oder das Platzhalterelement (10) als Platzhalter für einen Funktionsteilhalter (7,8,9) wahlweise in ihre jeweilige Gebrauchsstellung an dem Formhohlraum (6) positionierbar sind, **dadurch gekennzeichnet, dass** die Wechselvorrichtung (11) zumindest eine Drehhalterung (13) umfasst, an der der zumindest eine erste Funktionsteilhalter (7) und der zumindest eine weitere Funktionsteilhalter (8,9) und das wenigstens eine Platzhalterelement (10) angeordnet und/oder ausgebildet sind, wobei die Wechselvorrichtung (11), eine Antriebsvorrichtung (14) für die zumindest eine Drehhalterung (13) aufweist.

2. Spritzgießvorrichtung (1) nach Anspruch 1, **dadurch gekennzeichnet, dass** das in Gebrauchsstellung befindliche Platzhalterelement (10) vor einer Öffnung (12) des Formhohlraums (6) für das Funktionsteil (3) angeordnet ist und/oder diese nach außen hin abschließt, insbesondere abdichtet.

3. Spritzgießvorrichtung (1) nach einem der Ansprüche 1 oder 2, **dadurch gekennzeichnet, dass** die Antriebsvorrichtung (14) einen Antriebsriemen (15) umfasst, über den ein Antriebsmotor (16) der Antriebsvorrichtung (14) mit der zumindest einen Drehhalterung (13) verbunden ist.

4. Spritzgießvorrichtung (1) nach einem der vorherigen Ansprüche, **dadurch gekennzeichnet, dass** die Spritzgießvorrichtung (1), insbesondere die Wechselvorrichtung (11), eine Arretiervorrichtung (17) aufweist, mit der die zumindest eine Drehhalterung (13) in einer gewählten Drehstellung festlegbar ist.

5. Spritzgießvorrichtung (1) nach einem der vorherigen Ansprüche, **dadurch gekennzeichnet, dass** die Funktionsteile (3) Nadeln oder Hohlnadeln für Spritzen (4) sind und/oder dass die Funktionsteilhalter (7,8,9) als Nadelhalter ausgebildet sind, wobei der erste Funktionsteilhalter (7) auf einen ersten Nadeldurchmesser und der zumindest eine weitere Funktionsteilhalter (8,9) auf einen anderen Nadeldurchmesser abgestimmt sind.

6. Spritzgießvorrichtung (1) nach einem der vorherigen Ansprüche, **dadurch gekennzeichnet, dass** die Spritzgießvorrichtung (1) für jeden Formhohlraum (6) jeweils öffenbare Formeinsätze (23) aufweist.

7. Spritzgießvorrichtung (1) nach einem der vorherigen Ansprüche, **dadurch gekennzeichnet, dass** die Spritzgießform (5) zumindest drei Formplatten (24,25,26) aufweist, die zwischen einer geschlossenen Spritzposition und einer Bearbeitungsposition mit jeweils zueinander beabstandeten Formplatten (24, 25, 26) verstellbar sind, wobei der Formhohlraum (6) zwischen zwei Formplatten (24,25) ausgebildet ist und an der dritten Formplatte (26) der zumindest eine erste Funktionsteilhalter (7) und der zumindest eine weitere Funktionsteilhalter (8,9) und/oder das zumindest eine Platzhalterelement (10) angeordnet sind.

8. Spritzgießvorrichtung (1) nach Anspruch 7, **dadurch gekennzeichnet, dass** die Wechselvorrichtung (11) an der dritten Formplatte (26), insbesondere an einer den übrigen beiden Formplatten (24,25) abgewandten Rückseite der dritten Formplatte (26), angeordnet ist.

9. Spritzgießvorrichtung (1) nach einem der vorherigen Ansprüche, **dadurch gekennzeichnet, dass** der zumindest eine erste Funktionsteilhalter (7) und/oder der zumindest eine weitere Funktionsteilhalter (8,9) jeweils einen Einführtrichter (31) zum Einführen eines Funktionsteils (3) aufweisen und/oder jeweils eine Klemmhülse (32) umfassen und/oder als Klemmhülse (32) ausgebildet sind.

10. Spritzgießvorrichtung (1) nach einem der vorherigen Ansprüche, **dadurch gekennzeichnet, dass** die Spritzgießvorrichtung (1) eine Klemmvorrichtung (33) aufweist, mit der Funktionsteile (3), die in dem zumindest einen ersten Funktionsteilhalter (7) und/oder in dem zumindest einen weiteren Funktionsteilhalter (8,9), gehalten sind, klemmbar sind.

11. Spritzgießvorrichtung (1) nach Anspruch 9 oder 10, **dadurch gekennzeichnet, dass** die Klemmhülse (32) einen vorzugsweise in Längsrichtung der Klemmhülse (32) verlaufenden Klemmschlitz (34) aufweist, insbesondere wobei der Klemmschlitz (34) im Bereich seiner beiden Enden zur Materialschwächung der Klemmhülse (32) jeweils eine Erweiterung (45) umfasst, und/oder dass die Klemmhülse (32) einen Klemmabschnitt (35) mit einer außenseitigen Druckfläche (36) aufweist, die zur Verengung einer Funktionsteilaufnahme (37) der Klemmhülse (32) mit einem Klemmstempel (38) der Klemmvorrichtung (34) beaufschlagbar ist.

12. Spritzgießvorrichtung (1) nach einem der vorherigen Ansprüche, **dadurch gekennzeichnet, dass** die Spritzgießvorrichtung (1) eine Funktionsteileinlegevorrichtung (39) aufweist, mit der die Funktionsteile (3) in den zumindest einen ersten Funktionsteilhalter (7) und/oder in den zumindest einen weiteren Funktionsteilhalter (8,9) einlegbar sind.

13. Verfahren zum Spritzgießen von Mehrkomponententeilen (4), insbesondere von Spritzen, unter Verwendung einer Spritzgießvorrichtung (1) nach einem der vorherigen Ansprüche, wobei die Mehrkomponententeile (4) jeweils zumindest ein Funktionsteil (3) und ein daran angespritztes Kunststoffformteil (2) umfassen, **dadurch gekennzeichnet, dass** ein Funktionsteil (3) eines ersten Funktionsteiltyps mit einem darauf abgestimmten ersten Funktionsteilhalter (7) wenigstens bereichsweise in einen Formhohlraum (6) der Spritzgießvorrichtung (1) hineinragend in Spritzposition gehalten wird, wenn ein Mehrkomponententeil (4) mit einem Funktionsteil (3) des ersten Funktionsteiltyps hergestellt werden soll, und dass ein Funktionsteil (3) zumindest eines weiteren Funktionsteiltyps mit einem darauf abgestimmten weiteren Funktionsteilhalter (8,9) wenigstens bereichsweise in den Formhohlraum (6) der Spritzgießvorrichtung (1) hineinragend in Spritzposition gehalten wird, wenn ein Mehrkomponententeil (4) mit einem Funktionsteil (3) des zumindest einen weiteren Funktionsteiltyps hergestellt werden soll, und/oder dass ein Platzhalterelement (10) als Platzhalter für einen Funktionsteilhalter (7,8,9) vor eine Öffnung (12) des Formhohlraums (6) für ein Funktionsteil (3) bewegt wird, wenn Vorspritzlinge ohne Funktionsteile (3) hergestellt werden sollen, wobei der erste Funktionsteilhalter (7) und der zumindest eine weitere Funktionsteilhalter (8,9) und/oder das Platzhalterelement (10) mithilfe einer Wechselvorrichtung (11) der Spritzgießvorrichtung (1) in ihre Gebrauchsstellung positioniert werden.

14. Verwendung eines Platzhalterelements (10) als Platzhalter anstelle eines Funktionsteilhalters (7,8,9) mit einem Funktionsteil (3) vor einem Formhohlraum (6) einer Spritzgießvorrichtung (1) nach einem der Ansprüche 1 bis 12, die einen Formhohlraum (6) zur wenigstens bereichsweisen Aufnahme des Funktionsteils (3) und zum Anspritzen eines Kunststoffformteils (2) an das Funktionsteil (3) zur Bildung eines Mehrkomponententeils (4) aufweist.

15. Verwendung nach Anspruch 14, wobei das Platzhalterelement (10) anstelle eines Funktionshalters (7,8,9) vor einer Öffnung (12) des Formhohlraums (6) für die Funktionsteile (3) positioniert wird, um Vorspritzlinge ohne Funktionsteile (3) zu produzieren.

16. Computerprogramm, umfassend Befehle, die bewirken, dass die Spritzgießvorrichtung (1) nach einem der Ansprüche 1 bis 12 das Verfahren nach Anspruch 13 ausführt.

17. Computerlesbares Medium (41), auf dem das Computerprogramm nach Anspruch 16 gespeichert ist.

## Claims

1. Injection molding device (1) having an injection mold (5) which has at least one mold cavity (6) for at least partially accommodating a functional part (3) and for molding a plastic molding (2) onto the functional part (3) to form a multicomponent part (4), in particular a syringe (4), wherein the injection molding device (1) has at least one first functional part holder (7) for a first type of functional part and at least one further functional part holder (8) for a further type of functional part,
and/or at least one placeholder element (10),
and wherein the injection molding device (1) comprises a changing device (11), by means of which the first functional part holder (7) and the at least one further functional part holder (8, 9) and/or the placeholder element (10) as a placeholder for a functional part holder (7, 8, 9) can optionally be positioned in the respective use position thereof on the mold cavity (6), **characterized in that** the changing device (11) comprises at least one rotary holder (13), on which the at least one first functional part holder (7) and the at least one further functional part holder (8, 9) and the at least one placeholder element (10) are arranged and/or formed, wherein the changing device (11) has a driving device (14) for the at least one rotary holder (13).

2. Injection molding device (1) according to Claim 1, **characterized in that** the placeholder element (10) situated in the use position is arranged in front of an opening (12) of the mold cavity (6) for the functional part (3) and/or closes off, in particular seals off, said opening from the outside.

3. Injection molding device (1) according to either of Claims 1 or 2, **characterized in that** the driving device (14) comprises a drive belt (15), via which a drive motor (16) of the driving device (14) is connected to the at least one rotary holder (13).

4. Injection molding device (1) according to any of the preceding claims, **characterized in that** the injection molding device (1), in particular the changing device (11) has a locking device (17), by means of which the at least one rotary holder (13) can be fixed in a selected rotational position.

5. Injection molding device (1) according to any of the preceding claims, **characterized in that** the functional parts (3) are needles or hollow needles for syringes (4), and/or **in that** the functional part holders (7, 8, 9) are designed as needle holders, wherein the first functional part holder (7) is matched to a first needle diameter, and the at least one further functional part holder (8, 9) is matched to a different needle diameter.

6. Injection molding device (1) according to any of the preceding claims, **characterized in that** the injection molding device (1) has respective openable mold inserts (23) for each mold cavity (6).

7. Injection molding device (1) according to any of the preceding claims, **characterized in that** the injection mold (5) has at least three mold plates (24, 25, 26), which can be adjusted between a closed injection position and a processing position with respective mold plates (24, 25, 26) spaced apart from one another, wherein the mold cavity (6) is formed between two mold plates (24, 25), and the at least one first functional part holder (7) and the at least one further functional part holder (8, 9) and/or the at least one placeholder element (10) are arranged on the third mold plate (26).

8. Injection molding device (1) according to Claim 7, **characterized in that** the changing device (11) is arranged on the third mold plate (26), in particular on a rear side of the third mold plate (26) facing away from the other two mold plates (24, 25).

9. Injection molding device (1) according to any of the preceding claims, **characterized in that** the at least one first functional part holder (7) and/or the at least one further functional part holder (8, 9) each have/has an insertion funnel (31) for inserting a functional part (3) and/or each comprise/comprises a clamping sleeve (32) and/or are/is designed as a clamping sleeve (32).

10. Injection molding device (1) according to any of the preceding claims, **characterized in that** the injection molding device (1) has a clamping device (33), by means of which functional parts (3) which are held in the at least one first functional part holder (7) and/or in the at least one further functional part holder (8, 9) can be clamped.

11. Injection molding device (1) according to Claim 9 or 10, **characterized in that** the clamping sleeve (32) has a clamping slot (34), which preferably extends in the longitudinal direction of the clamping sleeve (32), in particular wherein the clamping slot (34) has a widened portion (45) in the region of each of its two ends in order to weaken the material of the clamping sleeve (32), and/or **in that** the clamping sleeve (32) has a clamping section (35) having an outer pressure surface (36), which can be acted upon by a clamping ram (38) of the clamping device (34) to narrow a functional part receptacle (37) of the clamping sleeve (32).

12. Injection molding device (1) according to any of the preceding claims, **characterized in that** the injection molding device (1) has a functional part insertion device (39), by means of which the functional parts (3) can be inserted into the at least one first functional part holder (7) and/or into the at least one further functional part holder (8, 9).

13. Method for injection molding multicomponent parts (4), in particular syringes, using an injection molding device (1) according to any of the preceding claims, wherein the multicomponent parts (4) each comprise at least one functional part (3) and a plastic molding (2) molded thereto, **characterized in that** a functional part (3) of a first type of functional part is held in the injection position by means of a first functional part holder (7) matched thereto, projecting at least partially into a mold cavity (6) of the injection molding device (1), when the intention is to produce a multicomponent part (4) having a functional part (3) of the first type of functional part, and **in that** a functional part (3) of at least one further type of functional part is held in the injection position by means of a further functional part holder (8, 9) matched thereto, projecting at least partially into the mold cavity (6) of the injection molding device (1), when the intention is to produce a multicomponent part (4) having a functional part (3) of the at least one further type of functional part, and/or in that a placeholder element (10) as a placeholder for a functional part holder (7, 8, 9) is moved in front of an opening (12) of the mold cavity (6) for a functional part (3) when the intention is to produce premoldings without functional parts (3), wherein the first functional part holder (7) and the at least one further functional part holder (8, 9) and/or the placeholder element (10) are positioned in the use position thereof with the aid of a changing device (11) of the injection molding device (1).

14. Use of a placeholder element (10) as a placeholder instead of a functional part holder (7, 8, 9) with a functional part (3) in front of a mold cavity (6) of an injection molding device (1) according to any of Claims 1 to 12, which has a mold cavity (6) for at least partially accommodating the functional part (3) and for molding a plastic molding (2) onto the functional part (3) to form a multicomponent part (4).

15. Use according to Claim 14, wherein the placeholder element (10) is positioned instead of a functional holder (7, 8, 9) in front of an opening (12) of the mold cavity (6) for the functional parts (3) in order to produce premoldings without functional parts (3).

16. Computer program comprising commands which ensure that the injection molding device (1) according to any of Claims 1 to 12 carries out the method according to Claim 13.

17. Computer-readable medium (41) on which the computer program according to Claim 16 is stored.

## Revendications

1. Dispositif de moulage par injection (1) avec un moule de moulage par injection (5) qui présente au moins une cavité de moule (6) pour recevoir au moins en partie une pièce fonctionnelle (3) et pour injecter une pièce moulée en plastique (2) sur la pièce fonctionnelle (3) pour former une pièce à composants multiples (4), en particulier une seringue (4), lequel dispositif de moulage par injection (1) présente au moins un premier support de pièce fonctionnelle (7) pour un premier type de pièce fonctionnelle et au moins un autre support de pièce fonctionnelle (8) pour un autre type de pièce fonctionnelle et/ou au moins un élément de substitution (10), le dispositif de moulage par injection (1) comprenant un dispositif d'échange (11) avec lequel le premier support de pièce fonctionnelle (7) et l'au moins un autre support de pièce fonctionnelle (8, 9) et/ou l'élément de substitution (10) faisant office de substitut pour un support de pièce fonctionnelle (7, 8, 9) peuvent être positionnés au choix à leur emplacement d'utilisation au niveau de la cavité de moule (6), **caractérisé en ce que** le dispositif d'échange (11) comprend au moins une fixation rotative (13) sur laquelle l'au moins un premier support de pièce fonctionnelle (7) et l'au moins un autre support de pièce fonctionnelle (8, 9) et l'au moins un élément de substitution (10) sont disposés et/ou formés, le dispositif d'échange (11) possédant un dispositif d'entraînement (14) pour l'au moins une fixation rotative (13).

2. Dispositif de moulage par injection (1) selon la revendication 1, **caractérisé en ce que** l'élément de substitution (10) se trouvant en position d'utilisation est disposé devant un orifice (12) de la cavité de moule (6) pour la pièce fonctionnelle (3) et/ou obture celui-ci vers l'extérieur, en particulier de manière étanche.

3. Dispositif de moulage par injection (1) selon une des revendications 1 ou 2, **caractérisé en ce que** le dispositif d'entraînement (14) comprend une courroie d'entraînement (15) par le biais de laquelle un moteur d'entraînement (16) du dispositif d'entraînement (14) est relié à l'au moins une fixation rotative (13).

4. Dispositif de moulage par injection (1) selon une des revendications précédentes, **caractérisé en ce que** ce dispositif de moulage par injection (1), en particulier le dispositif d'échange (11), présente un dispositif de blocage (17) avec lequel l'au moins une fixation rotative (13) peut être fixée dans une position de rotation choisie.

5. Dispositif de moulage par injection (1) selon une des revendications précédentes, **caractérisé en ce que** les pièces fonctionnelles (3) sont des aiguilles ou des aiguilles creuses pour des seringues (4) et/ou que les supports de pièce fonctionnelle (7, 8, 9) sont configurés comme des supports d'aiguille, le support de pièce fonctionnelle (7) étant adapté à un premier diamètre d'aiguille et l'au moins un autre support de pièce fonctionnelle (8, 9) à un autre diamètre d'aiguille.

6. Dispositif de moulage par injection (1) selon une des revendications précédentes, **caractérisé en ce que** ce dispositif de moulage par injection (1) présente pour chaque cavité de moule (6) des inserts de moule ouvrables (23).

7. Dispositif de moulage par injection (1) selon une des revendications précédentes, **caractérisé en ce que** le moule de moulage par injection (5) présente au moins trois plaques de moulage (24, 25, 26) qui sont réglables entre une position d'injection fermée et une position d'usinage dans laquelle les plaques de moulage (24, 25, 26) sont espacées entre elles, la cavité de moule (6) étant formée entre deux plaques de moulage (24, 25) et l'au moins un premier support de pièce fonctionnelle (7) et l'au moins un autre support de pièce fonctionnelle (8, 9) et/ou l'au moins un élément de substitution (10) étant disposés sur la troisième plaque de moulage (26).

8. Dispositif de moulage par injection (1) selon la revendication 7, **caractérisé en ce que** le dispositif d'échange (11) est disposé sur la troisième plaque de moulage (26), en particulier sur une face arrière de la troisième plaque de moulage (26) opposée aux deux autres plaques de moulage (24, 25).

9. Dispositif de moulage par injection (1) selon une des revendications précédentes, **caractérisé en ce que** l'au moins un premier support de pièce fonctionnelle (7) et/ou l'au moins un autre support de pièce fonctionnelle (8, 9) présentent chacun un cône d'insertion (31) pour insérer une pièce fonctionnelle (3) et/ou comprennent chacun une douille de serrage (32) et/ou sont configurés comme une douille de serrage (32).

10. Dispositif de moulage par injection (1) selon une des revendications précédentes, **caractérisé en ce que** ce dispositif de moulage par injection (1) présente un dispositif de serrage (33) avec lequel les pièces fonctionnelles (3) qui sont maintenues dans l'au moins un premier support de pièce fonctionnelle (7) et/ou dans l'au moins un autre support de pièce fonctionnelle (8, 9) peuvent être serrées.

11. Dispositif de moulage par injection (1) selon la revendication 9 ou 10, **caractérisé en ce que** la douille de serrage (32) présente une fente de serrage (34) courant de préférence dans la direction longitudinale de la douille de serrage (32), la fente de serrage (34) comprenant en particulier un élargissement (45) dans la région de chacune de ses deux extrémités pour affaiblir le matériau de la douille de serrage (32), et/ou la douille de serrage (32) présentant une section de serrage (35) avec une surface de pression (36) du côté extérieur qui peut être enfoncée pour rétrécir un logement de pièce fonctionnelle (37) de la douille de serrage (32) avec un poinçon de serrage (38) du dispositif de serrage (34).

12. Dispositif de moulage par injection (1) selon une des revendications précédentes, **caractérisé en ce que** ce dispositif de moulage par injection (1) présente un dispositif d'insertion de pièces fonctionnelles (39) avec lequel les pièces fonctionnelles (3) peuvent être insérées dans l'au moins un premier support de pièce fonctionnelle (7) et/ou dans l'au moins un autre support de pièce fonctionnelle (8, 9).

13. Procédé pour mouler par injection des pièces à composants multiples (4), en particulier des seringues, en utilisant un dispositif de moulage par injection (1) selon une des revendications précédentes, les pièces à composants multiples (4) comprenant chacune au moins une pièce fonctionnelle (3) et une pièce moulée en plastique (2) injectée sur celle-ci, **caractérisé en ce qu'**une pièce fonctionnelle (3) d'un premier type de pièce fonctionnelle est maintenue avec un premier support de pièce fonctionnelle (7) adapté à celle-ci au moins partiellement dans une cavité de moule (6) du dispositif de moulage par injection (1) de façon à dépasser en position d'injection quand une pièce à composants multiples (4) avec une pièce fonctionnelle (3) du premier type de pièce fonctionnelle doit être fabriquée, et qu'une pièce fonctionnelle (3) d'au moins un autre type de pièce fonctionnelle est maintenue avec un autre support de pièce fonctionnelle (8,9) adapté à celle-ci au moins partiellement dans une cavité de moule (6) du dispositif de moulage par injection (1) de façon à dépasser en position d'injection quand une pièce à composants multiples (4) avec une pièce fonctionnelle (3) de l'au moins un autre type de pièce fonctionnelle doit être fabriquée, et/ou qu'un élément de substitution (10) faisant office de substitut pour un support de pièce fonctionnelle (7, 8, 9) est placé devant un orifice (12) de la cavité de moule (6) pour une pièce fonctionnelle (3) quand des ébauches doivent être fabriquées sans pièces fonctionnelles (3), le premier support de pièce fonctionnelle (7) et l'au moins un autre support de pièce fonctionnelle (8, 9) et/ou l'élément de substitution (10) étant positionnés à leur emplacement d'utilisation à l'aide d'un dispositif d'échange (11) du dispositif de moulage par injection (1).

14. Utilisation d'un élément de substitution (10) comme substitut à la place d'un support de pièce fonctionnelle (7, 8, 9) avec une pièce fonctionnelle (3) devant une cavité de moule (6) d'un dispositif de moulage par injection (1) selon une des revendications 1 à 12 qui présente une cavité de moule (6) pour recevoir au moins partiellement la pièce fonctionnelle (3) et pour injecter une pièce moulée en plastique (2) sur la pièce fonctionnelle (3) pour former une pièce à composants multiples (4).

15. Utilisation selon la revendication 14, dans laquelle l'élément de substitution (10) est positionné à la place d'un support de pièce fonctionnelle (7, 8, 9) devant un orifice (12) de la cavité de moule (6) pour les pièces fonctionnelles (3) pour produire des ébauches sans pièces fonctionnelles (3).

16. Programme informatique comprenant des instructions qui ont pour effet que le dispositif de moulage par injection (1) selon une des revendications 1 à 12 mettent en œuvre le procédé selon la revendication 13.

17. Support lisible par ordinateur (41) sur lequel le programme informatique selon la revendication 16 est mémorisé.
